# EUROPÄISCHE PATENTSCHRIFT

(11) **EP 1 037 699 B1**
(45) Veröffentlichungstag und Bekanntmachung des Hinweises auf die Patenterteilung: **02.04.2003**
(21) Anmeldenummer: 98966205.1
(22) Anmeldetag: 01.12.1998
(51) Int. Cl.: B01D 46/52

(54) **FILTERELEMENT SOWIE VERFAHREN UND KLEBSTOFF-AUFTRAGVORRICHTUNG ZU DESSEN HERSTELLUNG**
FILTER ELEMENT AND METHOD AND ADHESIVE APPLICATION DEVICE FOR THE PRODUCTION THEREOF
ELEMENT FILTRANT, SON PROCEDE DE PRODUCTION ET DISPOSITIF D'APPLICATION DE COLLE UTILISE A CET EFFET

(30) Priorität: 03.12.1997 DE 19755466; 20.04.1998 DE 29807580 U
(43) Veröffentlichungstag der Anmeldung: 27.09.2000
(73) Patentinhaber: JACOBI Systemtechnik GmbH, 01474 Schönfeld-Weissig (DE)
(72) Erfinder: LIPPOLD, Hans-Joachim, D-14089 Berlin (DE)
(74) Vertreter: Heinze, Ekkehard, Dipl.-Phys. Dr.
(86) Internationale Anmeldenummer: DE9803615
(87) Internationale Veröffentlichungsnummer: WO99028012

(56) Entgegenhaltungen:
- EP-A- 0 867 216
- DE-A- 4 345 122
- US-A- 5 236 480

## Beschreibung

Die Erfindung betrifft ein Filterelement nach dem Oberbegriff des Anspruchs 1 und ein Verfahren zur Herstellung eines solchen sowie eine Klebstoff-Auftragvorrichtung und eine Anordnung zur Herstellung eines Fluidfiltereinsatzes mit einer solchen Klebstoff-Auftragvorrichtung.

Fluidfilterelemente dienen dazu, Verunreinigungen aus einem hindurchströmenden Fluid (insbesondere Luft oder technischen Gasen, ggfs. aber auch Flüssigkeiten) abzuscheiden. In Luftfiltern werden gegenwärtig überwiegend Filterelemente verwendet, welche ein Faservlies, insbesondere aus Glas-, Cellulose- oder synthetischen Fasern, aufweisen.

Um die effektive Filterfläche gegenüber der Anströmfläche des Filters zu vergrößern, ist das Filtermedium bei herkömmlichen Filtern der in Rede stehenden Art (sogenannten Minipleats) mäanderförmig zu im wesentlichen parallelen Faltenwänden zusammengelegt, so daß eine Anzahl von über Faltenkanten aneinander anschließenden, in der Fläche etwas gekrümmten Falten entsteht. Diese werden im Einströmbereich in einem kleinen und aufgrund der Krümmung nicht exakt definierten Winkel zu den Wandungen der Faltung und dabei quer zur Richtung der Faltenkanten von dem zu reinigenden Medium angeströmt.

Durch die Ungleichmäßigkeit der Faltenstruktur, Materialablagerung - insbesondere auch die Ablagerung größerer Partikel - an der Anströmseite des Filters und Wirbelbildungen im anströmenden Fluid usw. kommt es beim Durchströmen des Filters zu Inhomogenitäten der Fluidströmung, die die Faltenanordnung einer erheblichenen mechanischen Wechselbelastung aussetzen und letztlich Deformationen bewirken können. Zudem ist eine im wesentlichen parallele Faltung des Filtermaterials strömungstechnisch nicht optimal.

Bei Filtern mit größerer Faltenhöhe ist es seit längerem üblich, in das Filtermaterial Vertiefungen mit alternierender Orientierung und derart vorgegebener Gestalt einzuprägen, daß sich beim Falten des Materials die Vertiefungen benachbarter Faltenwände aneinanderlegen und gegeneinander abstützen, so daß eine Stabilisierung der Konfiguration erreicht wird. Die Gestalt der Einprägungen kann so vorbestimmt sein, daß sich eine präzise Zickzack-Faltung mit ebenen Faltenwänden ergibt; vgl. US 3 531 920. Auf die Einprägungen kann zusätzlich ein Kleber aufgetragen werden, der beim Falten ein bereichsweise festes Aneinanderhaften der Faltenwände und damit eine weitere Versteifung bewirkt; vgl. etwa DE 41 26 126 A1.

Aus DE 40 38 966 A1 ist es auch bekannt, halbkugelförmige Abstandshalter auf die Faltenwände aufzusetzen bzw. in diese einzufügen. Die Abstandshalter können - wie in der vorgenannten Druckschrift als eine Möglichkeit erwähnt oder auch in DE 30 37 019 A1 ausgeführt - Klebstoffaggregate, insbesondere in Fadenform, sein. Diese haben neben der abstandshaltenden zusätzlich eine die Faltenwände verbindende Wirkung und erhöhen somit die Steifigkeit des Filtereinsatzes zusätzlich.

In DE 39 03 730 A1 ist beschrieben, daß ein die Faltenlagen miteinander verbindender und stabilisierender Klebstoffaden, der nach der Faltung auf den Kantenbereich aufgetragen werden kann, mit Prägungen in den Faltenwänden kombiniert ist. Auch diese Lösung ergibt mechanisch relativ stabile Filtereinsätze, ist jedoch technologisch aufwendig.

Aus EP 0 377 419 A1 ist eine Anordnung bekannt, bei der durch im Scheitel- sowie im Sohlenbereich einer zu bildenden Faltenwandanordnung lokalisierte Klebstoffaggregate, die im Scheitelbereich doppelt aufeinandergelegt werden, dagegen im Sohlenbereich nur einfach vorliegen, die Verklebung von Faltenwänden in einer Weise realisiert werden kann, daß ein angenähert dreieckiger Faltenquerschnitt entsteht. Der Klebstoffauftrag erfolgt beidseitig auf das Material, was ebenfalls einen hohen technischen Aufwand erfordert.

Für Filter mit sehr großen Faltenhöhen wird in WO/95 17943 eine - technologisch ebenfalls anspruchsvolle - Kombination aus Einprägungen und zusätzlich abstandserweiternden Klebstoffaggregaten vorgeschlagen.

Die ältere Anmeldung EP 0 867 216 A1 (Priorität:29.03.1997, Veröffentlichungstag: 30.09.1998) beschreibt ein Filterelement aus einem flexiblen, zickzack-förmig gefalteten Filtermaterial und ein Verfahren zu dessen Herstellung, bei dem zur Abstandshaltung zwischen den einzelnen Lagen des Filterwerkstoffs sogenannte "Kleberraupen" mit konstanter Höhe aufgebracht sind. Infolge des Ein- und Ausschaltens des Klebstoffauftrages sind die Enden dieser Kleberraupen etwas verrundet, und in diesem verrundeten Bereich stützt sich die jeweils benachbarte Faltenfläche des Filtermaterials auf der Kleberraupe (nahezu punktuell) ab.

Aus der DE 43 45 122 A1 sind ein Filtereinsatz und ein Verfahren zu dessen Herstellung bekannt, bei denen auf ein geprägtes Filtermaterial der weiter oben erwähnten Art nicht nur eine dünne Klebstoffschicht zum Miteinander-Verkleben der geprägten Erhebungen aufgetragen wird, sondern ein ansteigender Klebstoffaden, der selbst mindestens abschnittsweise eine gewisse Höhe aufweist und somit als zusätzlicher Abstandshalter (neben den geprägten Erhebungen) wirkt. Mit diesem Verfahren lassen sich Schwebstofffilter mit vorteilhaften Gebrauchseigenschaften und sehr großer Faltenhöhe erzeugen, das Verfahren ist jedoch wegen der anspruchsvollen Kombination von Filtermaterialprägung und gesteuertem Klebstoffauftrag aufwendig.

Der Erfindung liegt die Aufgabe zugrunde, ein einfach und kostengünstig herzustellendes Filterelement der gattungsgemäßen Art mit guten strömungstechnischen Eigenschaften und hoher mechanischer Stabilität sowie ein Verfahren zur Herstellung dieses Filterelementes anzugeben. Weiterhin soll eine verbesserte Klebstoff-Auftragvorrichtung angegeben werden, die insbesondere die Herstellung neuartiger Fluidfiltereinsätze ermöglicht.

Die Aufgabe wird gemäß ihren verschiedenen Aspekten durch ein Filterelement mit den Merkmalen des Anspruchs 1 bzw. ein Verfahren mit den Merkmalen des Anspruchs 7 und weiterhin durch eine Klebstoff-Auftragvorrichtung mit den Merkmalen des Anspruchs 11 sowie eine Anordnung nach Anspruch 25 gelöst.

Die Erfindung schließt den Gedanken ein, unter Verzicht auf in das Filtermaterial eingeprägte Vertiefungen eine zickzackförmige, versteifte Filtermaterialkonfiguration allein mit auf das Filtermaterial aufgebrachten Abstandshaltern mit längs der Materialbahn in vorbestimmter Weise veränderlicher Höhe zu realisieren. Die Abstandshalter werden also insbesondere gleichsinnig mit der Querschnittsverengung der betreffenden Falte in Richtung auf die Faltensohle bzw. den Faltengrund hin kontinuierlich flacher, oder es sind zwischen jeweils zwei Faltenwänden zwei oder mehrere voneinander getrennte Abstandshalter vorgesehen, und ein dem Faltengrund benachbarter Abstandshalter ist jeweils dünner bzw. flacher als ein von dieser entfernter liegender.

Im Falle einer Realisierung durch einen Klebstoffauftrag kann dessen Stärke kontinuierlich gesteuert sein, oder er kann jeweils innerhalb der voneinander getrennten, unterschiedlich hohen Bereiche ("Klebstoffinseln") konstante Dicke aufweisen.

Die Abstandshalter können in einer vorteilhaften Ausgestaltung des Erfindungsgedankens, mit der eine besonders hohe Steifigkeit des Aufbaus erreicht wird, über den größeren Teil der Länge der Faltenwände gebildet sein.

Bei einer hierzu alternativen Ausgestaltung ist ausschließlich in den Bereichen, in denen die Faltenwände großen Abstand aufweisen, ein aufgetragener Klebstoff-Abstandshalter vorgesehen, während in den Bereichen der Faltengründe bzw. -sohlen kein Abstandshalter vorhanden ist bzw. der Klebstoff keine nennenswerte Dicke hat, indem die aufgetragene Menge etwa so bemessen ist, daß sie im wesentlichen in das Filtermaterial eindringt. Falls in diesen Bereichen überhaupt kein Klebstoff aufgebracht wird, erhöht sich in vorteilhafter Weise die filterfähige Fläche des Filterelementes.

Die Abstandshalter können in ihrem Höhenprofil so bemessen sein, daß jeweils ein Abstandshalter für den gewünschten Gesamtabstand zwischen den Faltenwänden sorgt, indem er einen Bereich der ihm zugewandten Faltenwand berührt, in dem kein weiterer Abstandshalter plaziert ist. Die Ausführung und Anordnung der einzelnen Abstandshalter kann aber auch so gewählt sein, daß sich beim Falten - zumindest in den Faltengipfelbereichen - zwei einander zugewandte Abstandshalter berühren und sich ihre Höhen (im verbundenen Zustand) zum einzustellenden lokalen Faltenabstand addieren.

Zur Erfüllung hoher Stabilitätsanforderungen wird man die Faltenwände bevorzugt jeweils mit nach beiden Seiten bzw. Oberflächen hin gerichteten Abstandshaltern versehen, so daß die Faltenwände sich beidseitig fest gegen benachbarte Faltenwände abstützen. Dies ist jedoch nicht zwingend notwendig; grundsätzlich kann auch eine Verklebung jedes zweiten Paares benachbarter Faltenwände ausreichend sein.

Werden die Abstandshalter durch einen Klebstoffauftrag erzeugt, so kann die senkrecht zu den Faltenkanten, d.h. beim Auftrag in Laufrichtung der Filtermaterialbahn zu- bzw. abnehmende Höhe vorteilhaft durch Steuerung der pro Zeiteinheit bzw. pro Längeneinheit der Filtermaterialbahn aus einer Auftragdüse austretenden Klebstoffmenge festgelegt werden. Zur Variation der Klebstoffmenge pro Zeiteinheit kann eine entsprechende Steuerung des Querschnitts der Austrittsöffnung der Auftragsvorrichtung vorgenommen werden, d.h. konkret bei Annäherung an die die künftigen Faltensohlen markierenden Faltlinien deren Querschnitt verringert und bei Entfernung von diesen vergrößert werden. Zusätzlich oder alternativ hierzu kann zur Variation der Klebstoffmenge pro Zeiteinheit eine entsprechende Steuerung des Austrittsdrucks aus der Auftragsvorrichtung vorgenommen werden. Schließlich kann - wahlweise in Kombination mit einer oder mehreren der anderen Möglichkeiten - die pro Längeneinheit der Filtermaterialbahn aufgetragene Klebstoffmenge durch Variation der Relativgeschwindigkeit zwischen der Materialbahn und der Austrittsöffnung einer Auftragsvorrichtung verändert werden, indem diese z.B. während des Durchlaufens der Filtermaterialbahn zusätzlich bewegt wird. Zudem kann die Auftragsmenge auch durch Temperatursteuerung beeinflußt werden.

Viskosität und Thixotropie des Klebstoffs im Auftragszustand müssen in Abstimmung auf die Oberflächeneigenschaften des Filtermaterials so eingestellt werden, daß ein Breitlaufen des Klebstoffs bei größerer Auftragsmenge verhindert wird. Im Interesse einer hohen Filterleistung soll natürlich eine möglichst kleine Fläche des Filtermaterials mit dem Abstandshalter (dem Klebstoff) bedeckt sein, was im Regelfall eine pastöse bis gelartige Konsistenz beim Auftrag erfordern wird.

Alternativ oder auch in Kombination mit einem mengengesteuerten Auftrag kann der Klebstoffauftrag in Richtung der Längserstreckung der Filtermaterialbahn mindestens einmal unterbrochen werden und die pro Längeneinheit aufgetragene Klebstoffmenge jenseits der Unterbrechung in Richtung auf die eine Faltensohle markierende Einprägung hin geringer gewählt werden als diesseits der Unterbrechung, d.h. im weit geöffneten Teil der Falte, wo der Abstandshalter höher sein muß.

Es ist zu beachten, daß in den vorstehenden Ausführungen unter einem für das Fluid durchlässigen Material sämtliche üblichen bzw. für bestimmte Fluids einsetzbaren Filtermaterialien, insbesondere Faservliese aus Zellulose, Glas-, Mineral- oder Keramikfasern, feinmaschige Gewebe mit oder ohne Imprägnierungen etc. und unter Klebstoffen die zur stoffschlüssigen Verbindung derartiger Materialien miteinander brauchbaren Stoffe, insbesondere Klebstoffe im engeren Sinne, aber auch am Filtermaterial haftende thermoplastische oder Schaumstoffmaterialien o. ä. zu verstehen sind. Ein besonders geeeignetes Material für die Abstandshalter ist mit Luft feinverschäumter Schmelzkleber.

Die genannten Ausgestaltungen sind sowohl für Filtereinsätze geeignet, bei denen die Faltung einen Körper von der Gestalt eines Quaders aufspannt, also etwa für den Einsatz als Luft- bzw. Gasfilter in der Erdgas- und Erdölindustrie, der Energiewirtschaft oder für Lüftungs- und Klimaanlagen, speziell in der Reinstraumtechnik. Sie sind aber ebenso für zylindrische Filtereinsätze geeignet, bei denen die Faltung einen Körper von der Gestalt eines Hohlzylinders aufspannt, also etwa für den Einsatz bei Luftfiltern für Kraftfahrzeuge oder Filterpatronen für reinigbare Pulsfilteranlagen.

Unter einer zickzackförmigen, kontinuierlichen Faltung sind auch Faltenanordnungen zu verstehen, bei denen der Faltenquerschnitt senkrecht zu den Faltenkanten etwa trapezförmig ist oder die Faltenkanten verrundet sind - wesentlich ist, daß die Ebenen der Faltenwände sich schneiden.

In einer vorteilhaften Variante des die Klebstoff-Auftragvorrichtung betreffenden Teils der Erfindung ist vorgesehen, daß jede Auftrageinheit eine eigene Dosiereinrichtung aufweist und den Dosiereinrichtungen eine gemeinsame Steuereinrichtung zugeordnet ist.

In Anbetracht der hohen Vorschubgeschwindigkeiten bei modernen Anlagen zur Filterherstellung ist die Dosiereinrichtung bevorzugt zur Realisierung einer Dosierzykluszeit von unter 1 s, insbesondere von unter 0,2 s, ausgelegt. Unter der Dosierzykluszeit wird dabei die Periodendauer sich wiederholender Auftragsprofilabschnitte verstanden.

Dieser Anforderung wird eine Klebstoff-Auftragvorrichtung gerecht, bei der die Auftrageinheiten als Düsen oder Nadeln mit längs der Düsen- oder Nadelachse gesteuert verschieblichem Dosierkegel ausgebildet sind und bei denen mechanisch, pneumatisch, hydraulisch, elektromagnetisch oder elektromotorisch wirkende Betätigungsmittel mit hoher Ansprechgeschwindigkeit zur Verschiebung des Dosierkegels vorgesehen sind. Als Betätigungsmittel sind in einer im wesentlichen auf mechanischen Komponenten beruhenden Ausführung eine Nockeneinrichtung und eine der Nockeneinrichtung entgegenwirkende Vorspann-Federeinrichtung vorgesehen. Eine weitere bevorzugte Ausführung umfaßt eine Motor-Getriebe-Einheit, die insbesondere einen mit einem vorprogrammierten Auftragsprofil fein steuerbaren Schrittmotor umfassen kann.

Alternativ oder auch zusätzlich zur Steuerung des Auftragsprofils über die Steuerung des Austrittsquerschnittes der Auftrageinheiten ist es möglich, den Auftrageinheiten gemeinsam eine schnellwirkende Drucksteuereinrichtung zur Steuerung des Klebstoff-Zuleitungsdrucks zuzuordnen.

Eingangsseitig ist der Steuereinrichtung mindestens ein Aufnehmer für ein Lagemerkmal und ggfs. zusätzlich die Durchlaufgeschwindigkeit des Flächenmaterials oder einen ein Lagemerkmal schaffenden Bearbeitungsschritt desselben zugeordnet. Ein solcher Aufnehmer ist insbesondere durch eine Transport- oder Prägewelle einer Transport- und/oder Prägeeinrichtung für das Flächenmaterial gebildet oder einer solchen zur Drehwinkelerfassung zugeordnet.

Bei der schon erwähnten Ausführung mit im wesentlichen mechanischer Steuerung umfaßt die Steuereinrichtung zweckmäßigerweise eine die Nockeneinrichtung mit der Transportoder Prägewelle verbindende und synchronisierende mechanische Übertragungseinrichtung.

Eine elektronische Steuerung weist andererseits eine programmierbare Verarbeitungseinheit auf, die eingangsseitig mit dem Aufnehmer (oder in der Praxis auch mehreren Aufnehmern) und ausgangsseitig mit der Dosiereinrichtung und/oder der Drucksteuereinrichtung verbunden ist.

Eine bevorzugte Anlage speziell zur Herstellung von Fluidfiltereinsätzen umfaßt zusätzlich zumindest eine Prägevorrichtung zur Bildung von Faltenkanten-Einprägungen und ggfs. zusätzlich aussteifenden Vertiefungen in einem als Filtermaterial ausgebildeten Flächenmaterial und Mittel zur Synchronisierung der Prägevorrichtung mit der Steuerung der Klebstoff-Auftragvorrichtung, so daß der lokale Querschnitt der Klebstoffspuren in vorbestimmter räumlicher Zuordnung zu den Faltenkanten-Einprägungen und/oder Vertiefungen steht. Mit der Anordnung sind Gruppen quasiendloser Klebstoffäden ohne Unterbrechung auf eine quasi-endlose Filtermaterialbahn auftragbar, es können abr auch separierte Klebstoffaggregate mit in der Sequenz vorbestimmtem Höhenprofil gebildet werden.

Die Verarbeitungseinheit sollte im Interesse eines flexiblen Einsatzes der Anlage für unterschiedliche Filterkonfigurationen bei kurzer Umrüstzeit einen Profilspeicher zur Speicherung vorbestimmter Klebstoffspurprofile in Zuordnung zur Position der Faltenkanten-Einprägungen und/oder der Vertiefungen aufweisen.

Bei einer Nockensteuerung stellt deren Kurvenprofil eine Art Speicher für das Klebstoffspurprofil dar, und zur einfachen Realisierung verschiedener Filterkonfigurationen sind die Steuerkurven auswechselbar.

Vorteilhafte Weiterbildungen der Erfindung sind im übrigen in den Unteransprüchen gekennzeichnet bzw. werden nachstehend zusammen mit der Beschreibung der bevorzugten Ausführung der Erfindung anhand der Figuren näher dargestellt. Es zeigen:
die Figuren 1a bis 1c perspektivische Prinzipdarstellungen von Filterelementen gemäß Ausführungsformen der Erfindung,
die Figuren 2a bis 2c schematische Querschnittsdarstellungen der Faltenanordnungen senkrecht zu den Faltenkanten bei gegenüber Fig. 1a bis 1c modifizierten Ausführungsformen von Filterelementen,
Figur 3 eine schematische Querschnittsdarstellung der Faltenanordnung (senkrecht zu den Faltenkanten) bei einer Ausführungsform eines hohlzylindrischen Filterelementes,
die Figuren 4a bis 4c Prinzipskizzen zur Illustration eines Verfahrens zur Herstellung der erfindungsgemäßen Filterelemente und einer Abwandlung desselben,
die Figuren 5a bis 5d schematische Darstellungen verschiedener Ausführungen der Auftrageinheiten und
die Figuren 6a und 6b schematische Querschnittsdarstellungen einer weiteren Auftrageinheit.

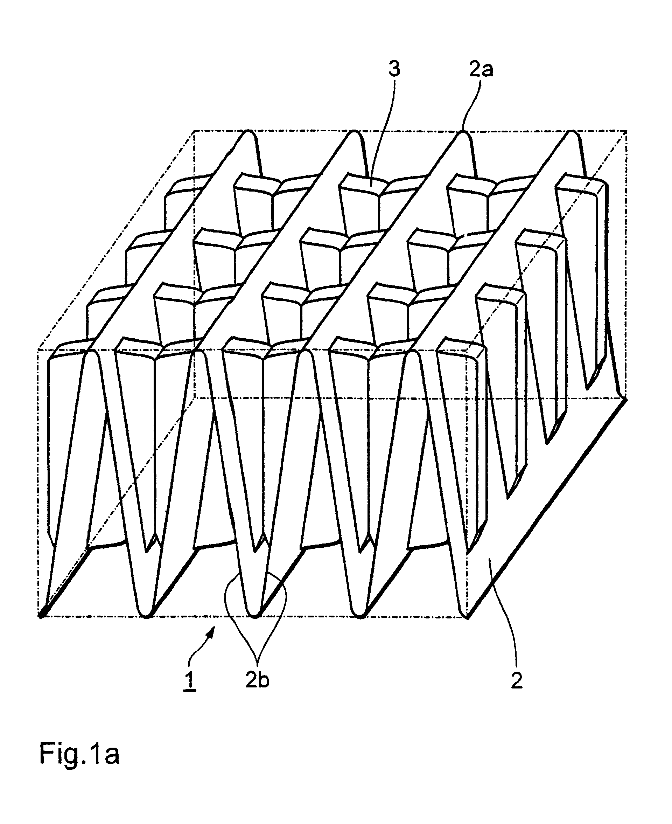

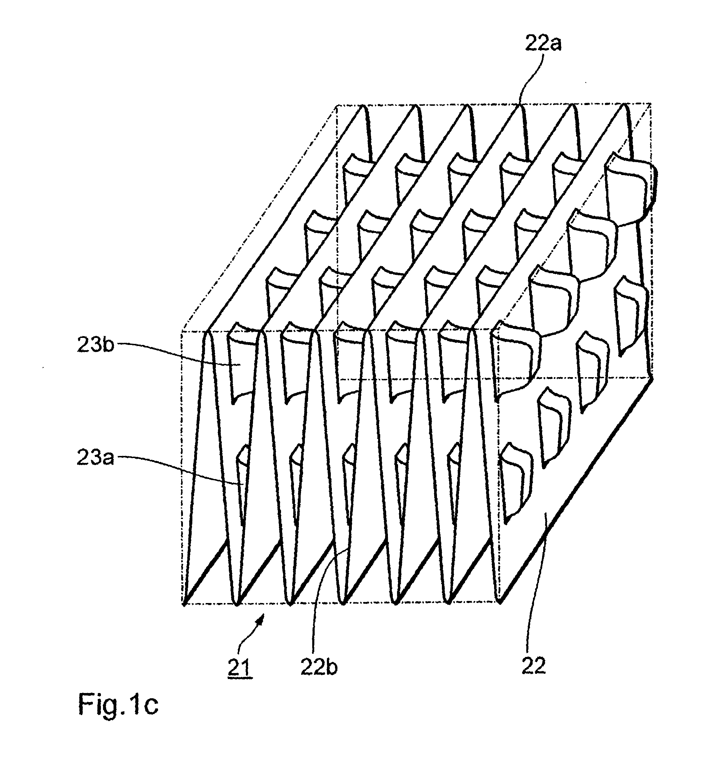

Fig. 1a zeigt in schematischer, nicht-maßstäblicher Darstellung einen in seiner äußeren Gestalt quaderförmigen Filtereinsatz 1 aus einem Filtervlies 2, das an Prägelinien bzw. Faltenkanten 2a zickzackförmig gefaltet ist, so daß sich jeweils zwischen zwei Faltenkanten 2a einen spitzen Winkel miteinander einschließende Faltenwände 2b ergeben. Auf die Faltenwände 2b sind beidseitig in Öffnungsrichtung der jeweiligen Falte hin höher (dicker) werdende Klebstoffraupen 3 aufgetragen. Bei der gezeigten Ausführung sind die Klebstoffraupen 3 auf den beiden Oberflächen des Filtervlieses 2 seitlich gegeneinander versetzt angeordnet, bevorzugt ist aber in der Praxis eine Anordnung der Klebstoffraupen in seitlicher Ausrichtung miteinander ("übereinander").

Die Klebstoffaggregate 3 einander gegenüberliegender Faltenwände 2b sind (was in der zeichnerischen Darstellung nicht gezeigt ist) miteinander verschmolzen, wodurch im ausgehärteten Zustand des Klebstoffs die entsprechenden Faltenwände fest miteinander verbunden und im wesentlichen starr gegeneinander abgestützt sind und dadurch das Filter-element 1 mechanisch steif ist.

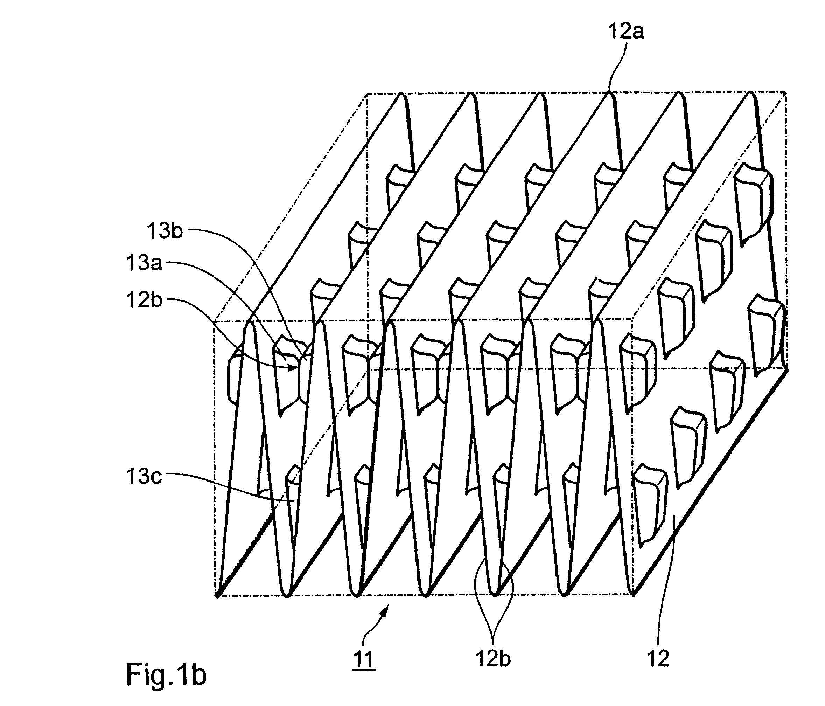

Fig. 1b zeigt einen gegenüber der Ausführung nach Fig. 1a modifizierten Filtereinsatz 11 mit kleinerem Faltenwinkel, d.h. bei gleicher Faltenhöhe geringerem maximalem Faltenabstand. Die Faltenwände 12b sind hier jeweils über kurze Klebstoffaggregate 13a, 13b im Öffnungsbereich der Faltenwände (unterhalb der Faltengipfel 12a) und 13c nahe der Faltensohle miteinander verbunden. Die nahe dem Faltengipfel angeordneten Klebstoffpunkte 13a, 13b haben jeweils eine dem hälftigen Abstand der Faltenwände 12b an diesem Punkt entsprechende Höhe und stehen miteinander in Kontakt bzw. sind miteinander verschmolzen, während der nahe der Faltensohle plazierte Klebstoffpunkt 13c eine dem lokalen Abstand der Faltenwände nahe der Faltensohle entsprechend über seine Länge variierende Höhe hat und mit seiner Scheitelfläche direkt die gegenüberliegende Faltenwand 12b berührt und an dieser haftet. Das Anhaften der Abstandshalter am Filtervlies wird im übrigen durch ein gewisses Eindringen des Klebstoffs in das Vliesmaterial gefördert.

Fig. 1c zeigt als weitere Modifikation einen Ausschnitt aus einem Filterelement 21 mit weiter verringertem Faltenwinkel und -abstand. Der Abstand ist hier auch im Öffnungs- bzw. Faltengipfelbereich so gering, daß er dort, ebenso wie im Faltensohlenbereich mittels der Klebstoffpunkte 23a, mit einzelnen Klebstoffpunkten 23b überbrückt werden kann, die direkt an der gegenüberliegenden Faltenwand 22b anhaften. Bei dieser Anordnung wird also nur jeder zweite der durch Prägelinien 22a voneinander getrennten Faltenwandabschnitte des Filtervlieses 22 mit Klebstoff versehen.

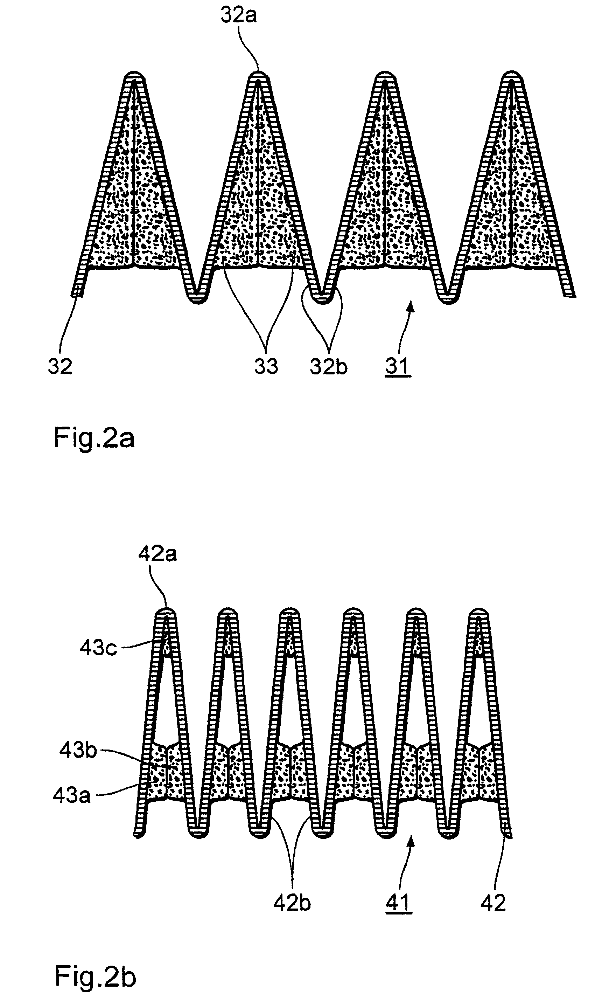

Fig. 2a zeigt eine Querschnittsdarstellung der Faltenanordnung eines weiteren Filterelementes 31 in einer Schnittebene parallel zur Längserstreckung des Filtervlieses 32. Die Ausbildung der Klebstoff-Abstandshalter 33 entspricht grundsätzlich Fig. 1a, diese sind aber im Unterschied zur dort gezeigten Ausführung nur in jeder zweiten durch Faltenwände 32b zwischen Faltenkanten 32a gebildeten Falte vorgesehen. Das Filtermaterial braucht hierbei nur auf einer Oberfläche mit Klebstoffraupen versehen zu werden, was die Technologie vereinfacht und eine Kostensenkung bei der Herstellung erlaubt.

Fig. 2b zeigt eine alternative Ausführung eines Filterelementes 41, bei dem in einer zu Fig. 2a ähnlichen Anordnung des Filtermaterials 42 - nämlich mit nur einseitiger Fixierung der sich zwischen Faltenkanten 42a erstreckenden Faltenwände 42b - nur der kleinere Teil der Länge bzw. Höhe der Faltenwände mit Klebstoffaggregaten 43a bzw. 43b sowie 43c versehen ist. Die in den Bereichen großen Faltenabstandes angeordneten Klebstoffaggregate 43a und 43b bilden unter Addition ihrer Höhen einen echten Abstandshalter, während der unmittelbar in der Faltensohle 42a angeordnete Klebstoffpunkt 43c lediglich zusätzlich stabilisierend und schwingungsdämpfend wirkt. Eine solche Anordnung der Klebstoffaggregate ist auch auf beiden Oberflächen der Faltenwände möglich, wobei dann eine der Fig. 1b ähnliche Ausführung mit beidseitiger Fixierung der Faltenwände entsteht.

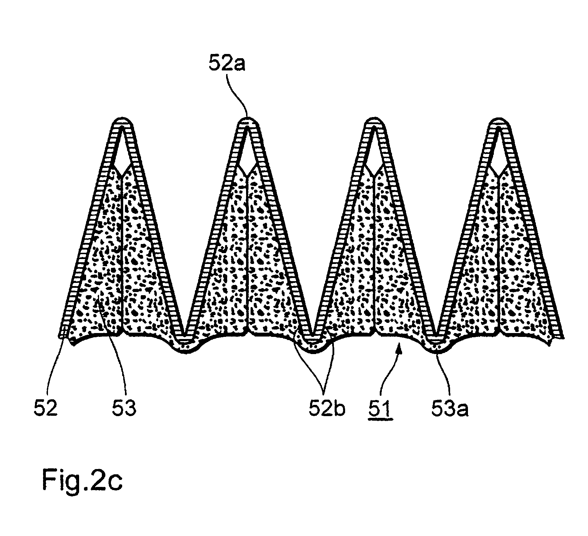

Fig. 2c zeigt ein der Anordnung nach Fig. 2a ähnliches Filterelement 51 aus einem Filtervlies 52, bei dem die Faltenkanten 52a eines (in der Figur des unteren) Faltenkantenbereiches durch flache Fortsätze 53a der Klebstoffaggregate 53 überbrückt sind, was die Position der Faltenwände 52b zusätzlich stabilisiert.

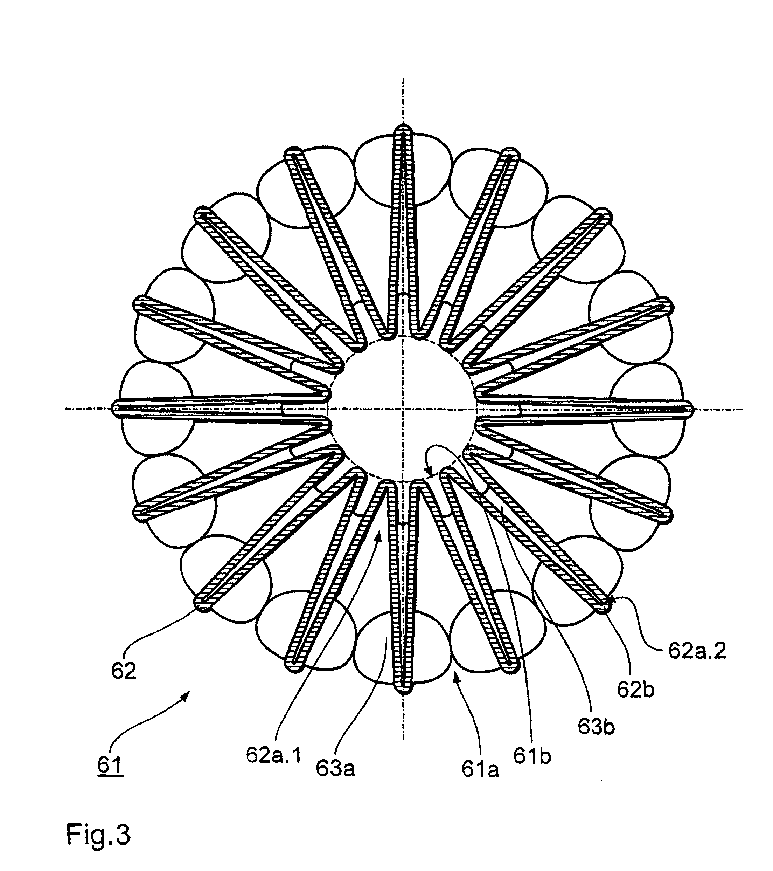

Fig. 3 ist eine schematische Querschnittsdarstellung eines in der äußeren Gestalt hohlzylindrischen Filtereinsatzes 61 gemäß einer weiteren Ausführungsform der Erfindung. Die hohlzylindrische Außenform bedingt hier die alternierende Aufeinanderfolge weiter Falten 61a und enger Falten 61b des Filtervlieses 62. Die Anordnung der in den weiten Falten 61a plazierten Abstandshalter 63a ähnelt der bei dem quaderförmigen Filtereinsatz gemäß Fig. 2b. Im Unterschied zu diesem ist hier aber in den Faltensohlen 62a.1 der weiten Falten 61a kein Klebstoff aufgebracht und die Faltenwände 62b sind beidseits verklebt, wobei in den engen Falten 61b nur eine dünne Klebstoffschicht 63b vorgesehen ist, die bis in die dortige Faltensohle 62a.2 reicht.

Neben diesen Ausführungsbeispielen ist eine Vielzahl von anderen Varianten denkbar. So sind die in den Ausführungsbeispielen gezeigten geometrischen Formen der Abstandshalter vielfältig variierbar.

Die Abstandshalter können, wie bei den obigen Ausführungen, durch einen Klebstoffauftrag mit gesteuerter Dicke (Höhe) mit anschließendem Aushärten des (bevorzugt einkomponentigen) Klebstoffs erzeugt sein. Es ist aber auch möglich, die Abstandshalter mit der in den Figuren gezeigten Querschnittsgestalt durch Aufschäumen eines entsprechenden Reaktionsgemischs - beispielsweise einer schnell verarbeitbaren Zweikomponentenmischung auf Urethanbasis - zu bilden. Weiterhin ist es denkbar, für spezielle Anwendungen vorgefertigte Abstandshalter - etwa aus organischem oder Kunststoff-Recyclingmaterial - auf die Filtermaterialbahn aufzukleben oder auch während oder unmittelbar nach der Faltung in das Faltenpaket einzufügen.

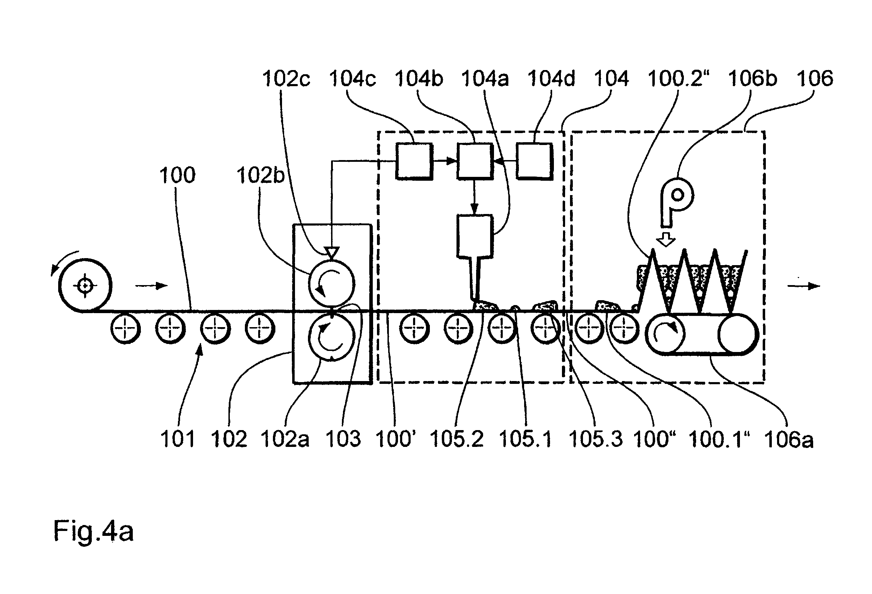

Fig. 4a bis 4c zeigen als Prinzipskizzen die wesentlichen Schritte der Bildung eines zickzackförmig gefalteten Minipleat-Filterelementes des in Fig. 2a gezeigten Aufbaus und die zugehörigen Vorrichtungskomponenten in drei Varianten.

Eine quasi-endlose Bahn eines Filtermaterials 100 wird über eine Rollenstrecke 101 zunächst einer Prägevorrichtung 102 zum Einprägen der Faltlinien 103 für die spätere Faltung zugeführt. Die Prägevorrichtung 102 weist neben einem Gesenk 102a eine Prägewalze 102b mit einem Prägewalzen-Drehwinkelfühler 102c auf.

Nachdem dort die Faltlinien 103 - unter Erfassung ihrer Relativposition auf dem Wege der Erfassung der Prägeleisteüber den Drehwinkelfühler 102c - eingeprägt wurden, durchläuft die geprägte Filtermaterialbahn 100' eine Klebstoff-Auftragvorrichtung 104. Diese weist eine Mehrzahl von nebeneinander angeordneten Auftrageinheiten 104a mit steuerbarem Klebstoffaustrag pro Zeiteinheit (von denen in der Figur nur eines gezeigt ist) und eine Steuereinheit 104b sowie eine Schnittstelle 104c zur Prägevorrichtung 102 auf.

Mittels der Auftrageinheiten 104a wird ein Heißkleber ("hot melt") oder Schaumkleber oder auch ein gewöhnlicher lufttrocknender Klebstoff unter präziser Steuerung durch die Steuereinheit 104b auf vorbestimmte Abschnitte der Materialbahn 100 mit vorbestimmtem Querschnitts- und insbesondere Höhenprofil zur Bildung unterschiedlicher Klebstoffraupen 105.1 bis 105.3 aufgetragen. Durch die nebeneinander angeordneten Auftrageinheiten wird jeweils eine Mehrzahl von auf gleicher Höhe und mit gleichem Höhenverlauf nebeneinanderliegenden Klebstoffraupen gebildet, was in der Seitenansicht nicht zu erkennen ist.

Der Steuereinheit 104b wird zur Vorgabe der korrekten Position und des vorbestimmten Höhenprofils der Klebstoffraupen relativ zur Position der Faltlinien 103 über die Schnittstelle 104c das Signal des Prägewalzen-Drehwinkelfühlers 102c zugeführt. Steuersignale zur Einstellung des Austrittsquerschnittes der Auftrageinheiten 104a für die Auftragsmengensteuerung leitet die Steuereinheit aus der vorbestimmten (ggfs. durch hier nicht gezeigte herkömmliche Fühler on-line überwachten) Durchlaufgeschwindigkeit der Filtermaterialbahn 100' oder Drehgeschwindigkeit der Prägewalzen und in einem Kennlinienspeicher 104d speicherprogrammierten Daten zu den Klebstoffund Filtermaterialeigenschaften und zur gewünschten Filtergeometrie ab.

Bei der gezeigten Variante werden auf jede zweite Faltlinie 103 Klebstoffpunkte 105.1 und auf die jeweils benachbarten Faltenwandabschnitte Klebstoffraupen 105.2 und 105.3 mit vorbestimmtem Höhenanstieg aufgetragen. Die entsprechende gespeicherte Steuerkennlinie für einen Dosierzyklus, die für eine Falteneinheit des Filtermaterials vorbestimmt und für alle Falteneinheiten in gleicher Weise wiederholt angewandt wird, umfaßt mithin für diese Ausführung der Klebstoffspuren Abschnitte, in denen die Klebstoffausgabe pro Zeiteinheit gleich Null ist (Schließzeiten aller Auftrageinheiten 104a), Abschnitte, in denen diese einen festen Wert hat ("Konstant-Öffnungszeiten") und Abschnitte, in denen sie stetig ansteigt oder abfällt ("Variabel-Öffnungszeiten"). Es sind aber auch Ausführungen der Klebstoffspuren ohne jede Unterbrechung möglich, bei denen natürlich keine Schließzeiten vorgesehen sind.

Zu beachten ist, daß der Kennlinienverlauf nicht völlig dem Höhenprofil der zu erzeugenden Klebstoffspuren entspricht, sondern das dynamische Verhalten des Klebstoffs nach dem Austritt aus der Auftragöffnung in Rechnung stellt, das insbesondere durch dessen physikochemische Parameter und in gewissem Umfang durch die Filtermaterialoberfläche bestimmt wird. So steht bei einer - für bestimmte Ausführungen der Erfindung bevorzugten - gelartigen Konsistenz und relativ hoher Oberflächenspannung auf dem Filtermaterial die erste Ableitung der Klebstoffmenge nach der Zeit in annähernd linearer Beziehung zum vorgegebenen Höhenanstieg der Klebstoffspuren, während bei weichpastöser Konsistenz und/oder geringerer Oberflächenspannung eine eher quadratische Abhängigkeit besteht. Die Einstellung der Kennlinie für den konkreten Anwendungsfall wird in der Regel von einer Versuchsreihe oder Simulationsrechnungen ausgehen müssen, ist dem Fachmann aber ohne weiteres möglich.

Für eine Filtergeometrie der in Fig. 1 gezeigten Art wären die oben erwähnten Öffnungs-Abschnitte der Kennlinie noch in mindestens zwei Bereiche mit unterschiedlicher, aber innerhalb der Bereiche konstanter erster Ableitung der Klebstoffmenge nach der Zeit unterteilt. Für eine Filterausführung, bei der jede Klebstoffspur aus vereinzelten Klebstoffpunkten besteht, die mit ab- bzw. zunehmender Höhe auf das Filtermaterial gesetzt sind, umfaßt die Kennlinie ggfs. nur alternierende Schließzeiten und Konstant-Öffnungszeiten (Anstieg = 0), diese beschreiben aber zusammen eine Einhüllende mit vorbestimmtem, von Null verschiedenem Anstieg.

Nach Verlassen der Klebstoff-Auftragvorrichtung 104 gelangt die geprägte und mit den Klebstoffaggregaten 105.1 bis 105.3 versehene Filtermaterialbahn 100" zu einer Faltstation 106, wo sie auf einer Transportvorrichtung 106a an den Faltlinien 103 derart gefaltet wird, daß die die Klebstoffraupen 105.2 und 105.3 tragenden Faltenwände 100.1" und 100.2" einander zugewandt sind und die Klebstoffraupen in Kontakt miteinander gebracht werden. In diesem Zustand wird der Klebstoff ausgehärtet. Dies ist in der Figur - für den Fall des Einsatzes eines Heißklebers - durch ein Kühlgebläse 106b symbolisiert, kann aber - je nach Art des eingesetzten Klebstoffs - auch durch eine Zwei-Komponenten-Reaktion oder durch Luftfeuchtigkeit oder durch einfaches Erkalten des Heißklebers erfolgen. Nach Ablängen mittels einer Schneidvorrichtung erhält man schließlich aus der quasi-endlosen Faltung einzelne Filterelemente.

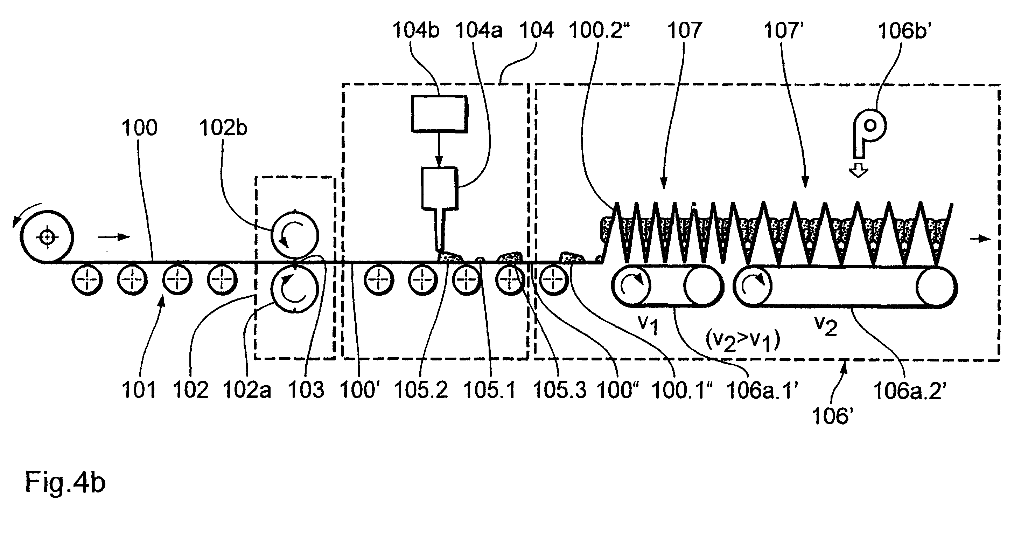

In Fig. 4b ist eine Modifikation des Verfahrens und der Anlage nach Fig. 4a gezeigt. Die mit Fig. 4a übereinstimmenden Komponenten und Verfahrensschritte werden nicht nochmals beschrieben.

Abweichend ist die Ausführung der Faltstation 106', die hier zwei mit unterschiedlichen Geschwindigkeiten v₁, v₂ laufende Transportvorrichtungen 106a.1' und 106a.2' aufweist. Durch die Faltung mit einer kleineren Geschwindigkeit v₁ wird zunächst eine enge Faltung des Filtermaterials 100" bewirkt, bei der die Klebstoffaggregate 105.2 und 105.3 unter einem gewissen Andruck miteinander verschmolzen werden und der Klebstoffpunkt 105.1 in die Faltensohle an der Faltlinie 103 gedrückt wird. Es entsteht ein primäres Faltenpaket 107 mit geringem, jedoch wegen der noch nicht erfolgten Aushärtung des Klebers noch nicht fixiertem Faltenabstand.

Bei Übergabe auf die mit der größeren Geschwindigkeit v₂ laufende Transportvorrichtung 106a.2' wird zwischen den einzelnen Falten eine Zugkraft erzeugt, die die Falten wieder etwas öffnet. Die an den Faltenwänden 100.1" und 100.2" anhaftenden, noch nicht ausgehärteten Klebstoffaggregate werden dadurch in Laufrichtung der Transportvorrichtung und somit quer zu den Faltenkanten 103 gestreckt, so daß sie im Querschnitt annähernd eine Knochen- bis Doppel-T-Form annehmen. In dieser Gestalt werden sie im durch ein Kühlgebläse 106b' erzeugten Luftstrom ausgehärtet, wodurch ein sekundäres Faltenpaket 107' mit relativ dünnwandigen und somit materialsparenden steifen Abstandshaltern gebildet wird, das anschließend wieder in einzelne Filterelemente abgelängt wird.

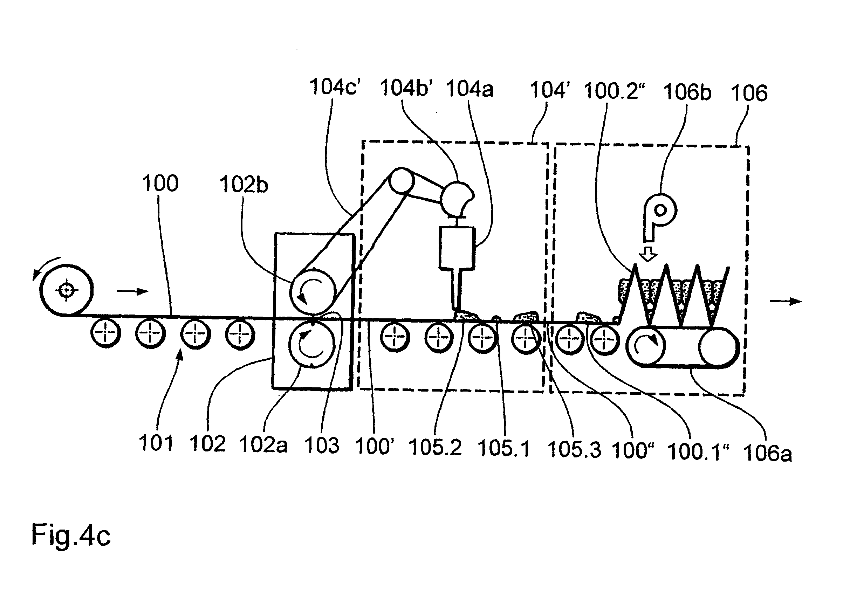

Fig. 4c zeigt eine gegenüber Fig. 4a modifizierte Anlage mit einer rein mechanischen Steuerung 104', die im wesentlichen einen mit der Prägewelle 102b im Eingriff stehenden Zahnriementrieb 104c' und eine durch diesen angetriebene Nockensteuerwelle 104b' aufweist, welche auf die Auftrageinheiten 104a mechanisch einwirkt. Ein gesonderter Aufnehmer für die Winkelstellung der Prägewelle kann hier entfallen, weil die Positionssynchronisierung der Klebstoffspuren mit den Faltenkanten durch die anfängliche Justierung des Zahnriementriebes und der Nockensteuerwelle erfolgt. Die übrigen Anlagenkomponenten entsprechen jedoch der in Fig. 4a gezeigten Anlage und werden hier nicht nochmals beschrieben.

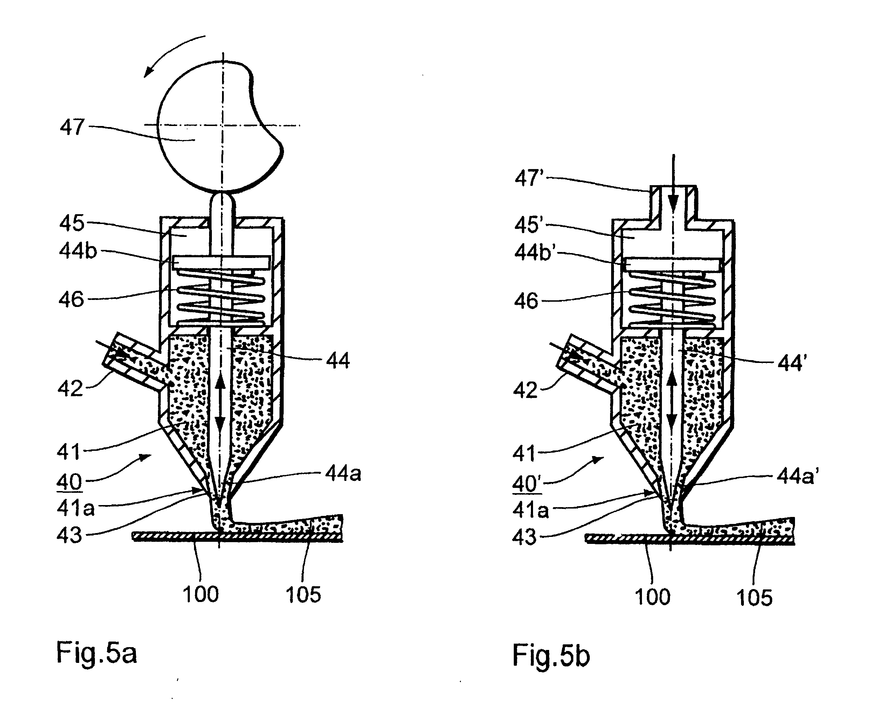

In Fig. 5a bis 5d sind schematisch bevorzugte Ausführungen der Auftrageinheiten dargestellt:
Fig. 5a zeigt eine Auftrageinheit 40 mit einer Klebstoffkammer 41, die über eine Druckleitung 42 mit einem (nicht gezeigten) Vorratsbehälter verbunden ist und eine Auftragdüse 41a aufweist, über die Klebstoff 43 zur Bildung einer Klebstoffspur 105 auf ein flächiges Filtermaterial 100 ausgetragen werden kann. In die Auftragdüse 41a greift ein Dosierkegel 44a, der als unteres Ende einer Dosierstange 44 ausgeführt ist und in Abhängigkeit von seiner Vertikalposition eine mehr oder weniger große Querschnittsfläche der Auftragdüse 41a freigibt. Bei einer besonders fein steuerbaren Ausführung ist der Kegelwinkel des Dosierkegels geringfügig (um einige Grad) größer als derjenige der Düseninnenwandung.

In einer Federkammer 45 oberhalb der Klebstoffkammer 41 ist die Dosierstange 44 von einer Druckfeder 46 umgeben, die sich gegen einen Teller 44b an der Dosierstange 44 abstützt und diese damit nach oben - d.h. in eine die Auftragdüse 42 vollständig freigebende Position - vorspannt. Gegen das obere Ende der Dosierstange drückt eine Nockeneinrichtung 47, die die Dosierstange entgegen der Vorspannkraft der Druckfeder 46 nach unten drückt und im Zusammenwirken mit der Druckfeder die Position des Dosierkegels 44a relativ zur Auftragdüse 41a und damit den effektiven Querschnitt der letzteren steuert. Damit wird letztlich die pro Zeiteinheit ausgetragene Klebstoffmenge und insbesondere die lokale Höhe der Klebstoffspur 105 auf dem Filtermaterial 100 gesteuert.

Die Auftrageinheit 40' nach Fig. 5b unterscheidet sich von der oben beschriebenen durch einen pneumatischen Antrieb mittels druckgesteuerter Druckluftzuführung über eine Druckluftzuleitung 47' in eine Druckkammer 45'. Diese wird - neben der Wandung der Auftrageinheit - durch eine dem Teller 44b aus Fig. 4a ähnlichen, aber gegen die Innenwandung angedichteten Druckteller 44b' begrenzt, der hier das obere Ende der (insoweit modifizierten) Dosierstange 44' bildet. Die Position des Dosierkegels 44a' relativ zur Auftragdüse 41a und der effektive Querschnitt der letzteren - und damit die pro Zeiteinheit ausgetragene Klebstoffmenge - werden durch das Verhältnis der Federvorspannkraft zum Momentandruck in der Druckkammer 45' bestimmt. Anstelle von Druckluft kann auch ein anderes Druckfluid verwendet werden, insbesondere auch ein hydraulischer Antrieb.

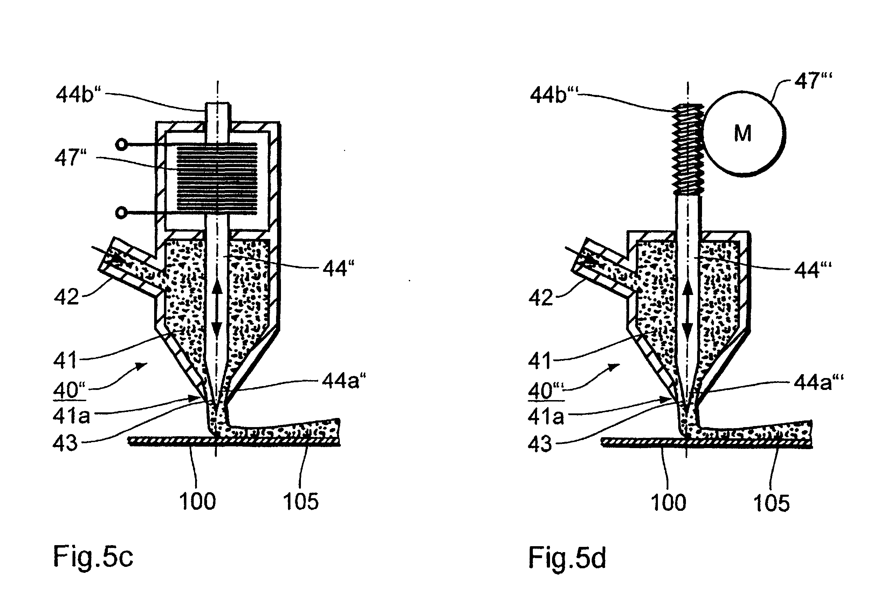

Grundsätzlich ähnlich ist auch die Ausführung einer Auftrageinheit 40" nach Fig. 5c aufgebaut, bei der an die Stelle der Druckluftsteuerung nach Fig. 4b eine elektromagnetische Positionssteuerung der Dosierstange 44" über eine Magnetspule 47" tritt, die einen permanentmagnetischen oberen Abschnitt 44b" der Dosierstange 44" umgreift.

Die Auftrageinheit 40'" gemäß Fig. 5d wird - ähnlich wie die Ausführung nach Fig. 5a - mechanisch gesteuert, und zwar durch einen Schrittmotor 47"', der die Dosierstange 44"' über ein Feingewinde 44b'" am oberen Ende entsprechend einem vorgespeicherten Schrittfolgeprogramm antreibt. Durch ein optionales (nicht gezeigtes) Zwischengetriebe läßt sich die ohnehin hohe Steuerpräzision noch weiter erhöhen. Eine Gegendruck-Federanordnung entfällt bei dieser Ausführung.

Die Zuführung des Klebstoffs zu den Auftrageinheiten erfolgt bevorzugt in einem Konstantdrucksystem mit einer grenzdruckgesteuerten Förderpumpe, deren Förderkapazität wesentlich größer ist als die maximale Momentan-Auftragsmenge aller Auftragseinheiten zusammen.

Die Auftrageinheiten gemäß Fig. 5a bis 5c ermöglichen bei entsprechender Formgebung des Dosierkegels und der Düseninnenwandung eine temporäre Überhöhung des Auftragdruckes an der Austrittsöffnung gegenüber dem Zuleitungsdruck bzw. dem mittleren Klebstoff kammer-Innendruck durch das Dosierelement, d.h. ein forciertes Ausstoßen von Klebstoff, in den Abschnitten des Dosierzyklus, in denen eine große Höhe der Klebstoffspur gefordert ist. Hierdurch können aufgrund der möglichen Reduzierung des Zuleitungsdruckes Energieeinsparungen und ggfs. eine höhere Genauigkeit des Klebstoffauftrages im mittleren Höhenbereich erzielt werden.

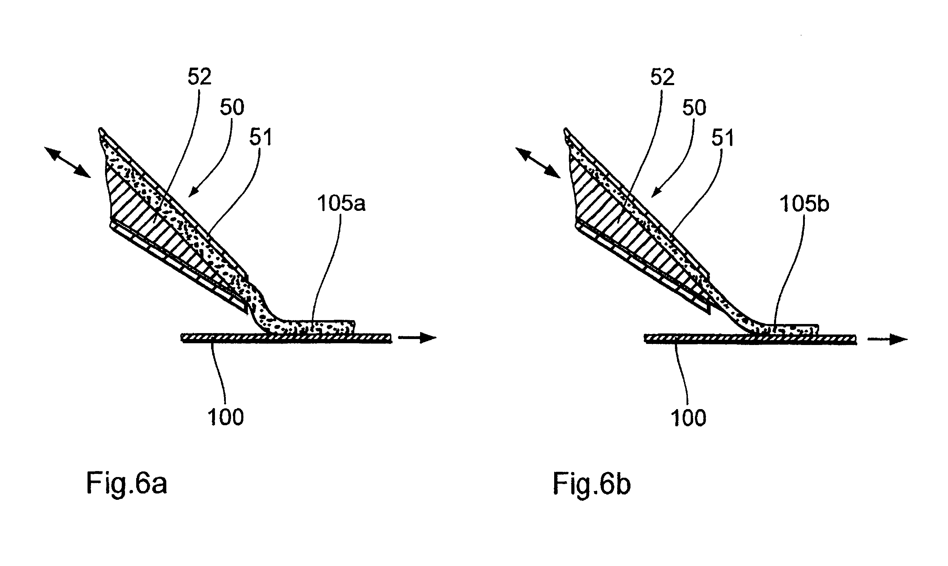

In Fig. 6a und 6b ist in zwei verschiedenen Stellungen ausschnittweise schematisch eine modifizierten Ausführung einer Auftrageinheit 50 dargestellt, die in vorteilhafter Weise die Bildung von Klebstoffspuren 105a bzw. 105b mit annähernd konstanter Breite, aber variabler Höhe auf dem Filtermaterial 100 ermöglicht. Die Auftrageinheit 50 weist eine Düse 51 mit rechteckigem Querschnitt und anstelle des Dosierkegels ein entsprechend prismatisch geformtes Dosierelement 52 auf, das den Querschnitt der Düse 51 von einer Kante des Rechtecks her asymmetrisch verengt.

In einer zweckmäßigen Abwandlung der gezeigten Ausführung wird das Dosierelement 52 auch in konstantem Abstand zum durchlaufenden Filtermaterial 100 - insbesondere dieses gleitend berührend und ggfs. definiert niederdrückend - gehalten, während die Veränderung des Auftragquerschnittes durch Verschiebung der Düsenhülle relativ zum Dosierelement und zur Filtermaterialoberfläche erfolgt.

Auch das oben skizzierte Verfahren und die Anlage zu dessen Durchführung sind vielfältig abwandelbar. So können zum Aufbringen verschiedener Klebstoffaggregate unterschiedliche Auftragsmodule eingesetzt werden, oder es kann - für ein Filterelement gemäß Fig. 2c - auch ein ununterbrochener Klebstoffaden mit lokal variierter Höhe erzeugt werden.

Weitere Abwandlungen der Düsen- und Dosierelementgestalt sind ebenso möglich wie der Einsatz anderer Antriebe bzw. Steuerungen und die Nutzung zusätzlicher Freiheitsgrade zur Beeinflussung des zeitvariablen Klebstoff-Höhenprofils, etwa einer Variation der Relativgeschwindigkeit zwischen Filtermaterial und Auftragöffnung mittels einer steuerbar beweglichen Halterung für die Auftrageinheiten.

## Patentansprüche

1. Filterelement (1; 21; 31; 41; 51; 61), insbesondere in quaderförmiger oder hohlzylindrischer Außenform, mit einer Anzahl von in kontinuierlicher Faltung jeweils zwischen Faltenkanten (2a; 12a; 22a; 32a; 42a; 52a; 62.a1, 62.a2; 103) angeordneten ebenen Faltenwänden (2b; 12b; 22b; 32b; 42b; 52b; 62b; 11.1". 100.2") aus fluiddurchlässigem Filtermaterial (2; 212; 22; 32; 42; 52; 62; 100), wobei mindestens in einem Abschnitt zwischen mindestens jedem zweiten Paar benachbarter Faltenwände diese verbindende und gegeneinander abstützende Abstandshalter (3; 13a-c; 23a, 23b; 33; 43a-c; 53; 63a, 63b; 1051. bis 105.3) vorgesehen sind, die nicht aus dem Filtermaterial bestehen,
**dadurch gekennzeichnet, daß**
die Abstandshalter mit sich in Richtung senkrecht zu den Faltenkanten ändernder Höhe,
welche gleichsinnig mit der Querschnittsverengung der betreffenden Falte in Richtung auf die Faltensohle bzw. den Faltengrund hin kontinuierlich flacher werden, auf dem ebenen Filtermaterial gebildet sind und/oder in Richtung senkrecht zu den Faltenkanten jeweils mindestens zwei Abstandshalter mit unterschiedlicher Höhe auf dem ebenen Filtermaterial gereiht gebildet sind derart, daß durch Berührung der Abstandshalter mit der gegenüberliegenden Faltenwand oder einem auf dieser angeordneten Abstandshalter eine zickzackförmige Faltenanordnung gebildet ist.

2. Filterelement nach Anspruch 1, **dadurch gekennzeichnet, daß** die Abstandshalter (3; 13a-c; 23a, 23b; 33; 43a-c; 53; 63a, 63b; 105.1 bis 105.3) durch ausgehärtete Klebstoffaggregate gebildet sind.

3. Filterelement nach Anspruch 1 oder 2, **dadurch gekennzeichnet, daß** sich über den größeren Teil der Filtermateriallänge zwischen den benachbarten Faltenkanten (2a; 32a; 52a) erstreckende Abstandshalter (3; 33; 53) vorgesehen sind, die in gleichem Maß mit der Querschnittsverengung einer Falte in Richtung auf diejenige Faltenkante hin kontinuierlich flacher wurden, die die über den Abstandshalter miteinander verbundenen Faltenwände (2b; 32b; 52b) gemeinsam haben.

4. Filterelement nach Anspruch 1 oder 2, **dadurch gekennzeichnet, daß** sich über den kleineren Teil der Filtermateriallänge zwischen den benachbarten Faltenkanten erstreckende Abstandshalter (13a, 13b; 23b; 43a, 43b; 63a; 105.2, 105.3) in demjenigen Bereich der Faltung vorgesehen sind, in dem die Faltenwände (12b; 22b; 42b; 62b; 100.1". 100.2") großen Abstand voneinander aufweisen.

5. Filterelement nach Anspruch 3 oder 4, **dadurch gekennzeichnet, daß** die Abstandshalter jeweils im wesentlichen unmittelbar an einer vorgeprägten Faltenkante und von dieser begrenzt angeordnet sind.

6. Filterelement nach einem der vorhergehenden Ansprüche, **dadurch gekennzeichnet, daß** das Filtermaterial (2; 12) auf aneinander angrenzenden Faltenwänden in alternierender Anordnung nach beiden Seiten hin ausgerichtete Abstandshalter (3; 13a-c) aufweist derart, daß die Faltenwände (2b; 12b) sich beidseitig über Abstandshalter gegen benachbarte Faltenwände abstützen.

7. Verfahren zur Herstellung eines Filterelementes nach einem der vorhergehenden Ansprüche,
**dadurch gekennzeichnet, daß**
eine Bahn des Filtermaterials (100) nur mit die Lage der Faltenkanten vorbestimmenden linearem Einprägungen (103) versehen wird,
danach auf mindestens einen Teil der sich zwischen benachbarten Einprägungen erstreckenden ebenen Faltenwandbereiche Abstandshalter (105.1 bis 105.3) mit unterschiedlicher und/oder sich in Längsrichtung der Filtermaterialbahn ändernder Höhe aufgebracht werden und
die Materialbahn an den die Faltenkanten bildenden Einprägungen zickzackförmig gefaltet wird, wodurch die Abstandshalter mit der jeweils gegenüberliegenden Faltenwand oder jeweils einem auf dieser vorgesehenen weiteren Abstandshalter in Kontakt gebracht werden.

8. Verfahren nach Anspruch 7, **dadurch gekennzeichnet, daß** das Aufbringen der Abstandshalter (105.1 bis 105.3) als mengengesteuerter Klebstoffauftrag (104) auf die Materialbahn (100) erfolgt und während und/oder nach der Faltung (106a) eine Aushärtung (106b; 106b') des Klebstoffs ausgeführt wird.

9. Verfahren nach Anspruch 8, **dadurch gekennzeichnet, daß** der Klebstoffauftrag derart gesteuert wird, daß Klebstoffaggregate (105.1 bis 105.3) mit in Längsrichtung der Materialbahn ab- bzw. zunehmender Höhe und/oder aufeinanderfolgend Klebstoffaggregate unterschiedlicher Höhe aufgetragen werden.

10. Verfahren nach Anspruch 9, **dadurch gekennzeichnet, daß** die Höhe der Klebstoffaggregate über die Variation der pro Zeiteinheit aus einer Auftragsvorrichtung (104a) ausgegebenen Klebstoffmenge und/oder der momentanen Relativgeschwindigkeit zwischen Auftragsvorrichtung und Filtermaterialbahn (100) und/oder durch eine Aufweitung der Falten (106a.2') nach einem primären Faltschritt (106a.1') verändert wird.

11. Klebstoff-Auftragvorrichtung (104; 104') zum Auftrag von Klebstoffspuren (3; 105; 105.1 bis 105.3; 105a, 105b) auf ein durchlaufendes flächiges Filtermaterial (2; 100) mit vorbestimmter Periodizität, mit einer Mehrzahl von gleichartigen Auftrageinheiten (104a; 40; 40'; 40"; 40'"; 50), denen mindestens eine Dosiereinrichtung (104b; 104b'; 47; 47'; 47"; 47'"; 52) zur Einstellung der pro Zeiteinheit aus den Auftrageinheiten ausgetragenen Klebstoffmenge zugeordnet ist, wobei der Dosiereinrichtung oder den Dosiereinrichtungen eine mit vorbestimmter Dosierzykluszeit betriebene Steuereinrichtung (102c, 104b, 104d; 104c') zur für alle Auftrageinheiten gleichlaufenden zeitabhängigen Einstellung der ausgetragenen Klebstoffmenge gemäß einer stetige Anstiegsbereiche oder eine stetige Einhüllende umfassenden Auftrag-Kennlinie zugeordnet ist derart, daß die Auftrageinrichtungen mit durch die Dosierzykluszeit definierter Periodizität identische Klebstoffspuren mit durch die Auftrag-Kennlinie und die Klebstoff- und Filtermaterialeigenschaften vorbestimmtem Höhenanstieg erzeugen,
**dadurch gekennzeichnet, daß** die Auftrageinheiten (104a; 40; 40'; 40"; 40' "; 50) eine Düse oder Nadel mit einem relativ zur Austrittsöffnung längs der Düsenoder Nadelachse gesteuert verschieblichem Dosierelement (44a; 44a'; 44a"; 44a' "; 52) aufweisen.

12. Klebstoff-Auftragvorrichtung nach Anspruch 11, **dadurch gekennzeichnet, daß** jede Auftrageinheit (104a; 40; 40'; 40"; 40'") eine Dosiereinrichtung (104b; 104b'; 47; 47' ; 47" ; 47'") aufweist und den Dosiereinrichtungen eine gemeinsame Steuereinrichtung (102c, 104b, 104d; 104c') zugeordnet ist.

13. Klebstoff-Auftragvorrichtung nach Anspruch 11 oder 12, **dadurch gekennzeichnet, daß** die Dosiereinrichtung (104b; 104b'; 47; 47'; 47"; 47'"; 50) zur Realisierung einer Dosierzykluszeit von unter 1 s, insbesondere von unter 0,2 s, ausgelegt ist.

14. Klebstoff-Auftragvorrichtung nach einem der Ansprüche 11 bis 13 **dadurch gekennzeichnet, daß** die Düse oder Nadel einen konisch ausgebildeten Klebstoffaustrittsabschnitt (41a) und das Dosierelement (44a; 44a'; 44a") einen Dosierkegel mit einem gegenüber dem Düsen- oder Nadelkonus geringfügig kleineren Kegelwinkel aufweist.

15. Klebstoff-Auftragvorrichtung nach einem der Ansprüche 11 bis 14, **dadurch gekennzeichnet, daß** das Dosierelement (52) konstanten Abstand zur Filtermaterialoberfläche (100) aufweist, insbesondere diese nahezu berührt, und der Abstand der Austrittsöffnung der Düse oder Nadel (50) zur Filtermaterialoberfläche veränderlich ist.

16. Klebstoff-Auftragvorrichtung nach einem der Ansprüche 11 bis 15, **dadurch gekennzeichnet, daß** den Auftrageinheiten (104a; 40; 40'; 40"; 40'"; 50) mechanisch, pneumatisch, hydraulisch oder elektromagnetisch wirkende Betätigungsmittel (46, 47; 47"; 47"') zur Verschiebung des Dosierelements (44a; 44a'; 44a"; 44a"') oder der Austrittsöffnung zugeordnet sind.

17. Klebstoff-Auftragvorrichtung nach Anspruch 16, **dadurch gekennzeichnet, daß** die Betätigungsmittel eine Nokkeneinrichtung (47) und eine der Nockeneinrichtung entgegenwirkende Vorspann-Federeinrichtung (46) aufweisen, wobei die Nockeneinrichtung eine entsprechend der Kennlinie geformte Steuerkurve umfaßt.

18. Klebstoff-Auftragvorrichtung nach Anspruch 16, **dadurch gekennzeichnet, daß** die Betätigungsmittel eine Motor-Getriebe-Einheit (44a'", 47"'), insbesondere eine Anordnung aus einem Schrittmotor und einer Gewinde- oder Zahnstange, umfassen.

19. Klebstoff-Auftragvorrichtung nach einem der Ansprüche 15 bis 18, **dadurch gekennzeichnet, daß** die Betätigungsmittel (46, 47; 47", 47'") zur kurzzeitigen Erzeugung eines den Zuleitungsdruck des Klebstoffs übersteigeden Auftragdruckes an der Austrittsöffnung ausgebildet sind.

20. Klebstoff-Auftragvorrichtung nach einem der Ansprüche 11 bis 19, **dadurch gekennzeichnet, daß** den Auftrageinheiten (40') gemeinsam eine schnellwirkende Drucksteuereinrichtung zur Steuerung des Klebstoff-Zuleitungsdrucks zugeordnet ist.

21. Klebstoff-Auftragvorrichtung nach einem der Ansprüche 11 bis 20, **dadurch gekennzeichnet, daß** eingangsseitig mit der Steuereinrichtung mindestens ein Aufnehmer (102b; 102c) für die Position eines für den Klebstoffauftrag relevanten, insbesondere den aktuellen Startpunkt der Dosierzykluszeit bestimmenden, Punktes auf dem Filtermaterial oder einen zusätzlichen Schritt der Bearbeitung desselben kennzeichnende Größe und/oder die Durchlaufgeschwindigkeit des Filtermaterials (2; 100) verbunden ist.

22. Klebstoff-Auftragvorrichtung nach Anspruch 21, **dadurch gekennzeichnet, daß** der Aufnehmer durch eine Transport- oder Prägewelle (102b) einer Transport- und/oder Prägeeinrichtung (102) für das Filtermaterial (2; 100) gebildet oder einer solchen zugeordnet ist.

23. Klebstoff-Auftragvorrichtung nach Anspruch 17 und 22, **dadurch gekennzeichnet, daß** die Steuereinrichtung eine die Nockeneinrichtung mit der Transport- oder Prägewelle verbindende und synchronisierende mechanische Übertragungseinrichtung (104c') umfaßt.

24. Klebstoff-Auftragvorrichtung nach einem der Ansprüche 21 bis 23, **dadurch gekennzeichnet, daß** die Steuereinrichtung eine programmierbare Verarbeitungseinheit (104b) aufweist, die eingangsseitig mit dem Aufnehmer (102b; 102c) und einem Kennlinienspeicher (104d) zur Speicherung vorbestimmter Auftrag-Kennlinien zur Ausführung einer Mehrzahl von Klebstoffspurprofilen und ausgangsseitig mit der Dosiereinrichtung (104a) und/oder der Drucksteuereinrichtung verbunden ist.

25. Anordnung zur Herstellung eines Fluidfiltereinsatzes mit einer Klebstoff-Auftragvorrichtung nach einem der AnSprüche 11 bis 24, **gekennzeichnet durch** eine Prägevorrichtung (102) zur Bildung von Faltenkanten-Einprägungen (103) und/oder aussteifenden Vertiefungen in dem Filtermaterial und Mittel (102c, 104c; 102b, 104c') zur Synchronisierung der Prägevorrichtung mit der Steuerung der Klebstoff-Auftragvorrichtung (104; 104') zur Erzeugung der Klebstoffspuren (3; 105; 105.1 bis 105.3) mit einem lokalen Querschnitt in vorbestimmter räumlicher Zuordnung zu den Faltenkanten-Einprägungen (103) und/oder Vertiefungen und mit **durch** deren Abstand vorgegebener Dosierzykluszeit.

## Claims

1. Filter element (1; 21; 31; 41; 51; 61), in particular of cuboid or hollow-cylindrical outer shape, comprising a number of even pleat walls (2b; 12b; 22b; 32b; 42b; 52b; 62b; 11.1"; 100.2") of fluid-permeable filter material (2; 212; 22; 32; 42; 52; 62; 100), each arranged in a continuous folding between pleat edges (2a; 12a; 22a; 32a; 42a; 52a; 62.a1; 62a2; 103) and whereby spacers (3; 13a-c; 23a; 23b; 33; 43a-c; 53; 63a, 63 b; 105.1 through 105.3), which are not made of said filter material and which connect and support said pleat walls against each other, are provided at least in one portion between at least each second pair of adjacent pleat walls, **characterized in that** said spacers are formed on the level filter material at a height variable in the direction perpendicular to said pleat edges wherein the spacers taper synchronously with the narrowing of the cross-section of the corresponding pleat to the bottom of the pleat and/or that at least two spacers of different respective heights are formed on the level filter material in the direction perpendicular to the pleat edges such that a zick-zack pleat arrangement is formed when a spacer comes into contact with the opposing pleat wall or a spacer disposed thereupon.

2. Filter element according to claim 1, **characterized in that** said spacers (3; 13a-c; 23a; 23b; 33; 43a-c; 53; 63a, 63b; 105.1 through 105.3) are formed from hardened adhesive agent aggregates.

3. Filter element according to claim 1 or 2, **characterized in that** spacers (3; 33; 53) are provided extending over the larger portion of the filter material length between said adjacent pleat edges (2a; 32a; 52a) which continuously flatten proportionally with the pleat section contraction in the direction of the pleat having the pleat walls (2b; 32b; 52b) in common which are interconnected by said spacer.

4. Filter element according to claim 1 or 2, **characterized in that** spacers (13a; 13b; 23b; 43a; 43b; 63a; 105.2, 105.3) extending over the smaller portion of the filter material length between said adjacent pleat walls are provided in the area of the pleat in which the pleat walls (12b; 22b; 42b; 62b; 100.1"; 100.2") have a large spacing from one another.

5. Filter element according to claim 3 or 4, **characterized in that** each of said spacers are disposed essentially directly on and limited by a pre-impressed pleat edge.

6. Filter element according to any one of the preceding claims,
**characterized in that** said filter material (2; 12) on adjoining pleat walls comprises spacers (3; 13a-c) in alternating arrangement oriented towards both sides such that said pleat walls (2b; 12b) are supported on both sides against adjacent pleat walls via spacers.

7. Method for producing a filter element according to one of the preceding claims, **characterized in that** one length of the filter material (100) is provided with linear impressions (103) which only predetermine the position of the pleat edges,
and subsequently, spacers having differing heights and/or heights varying in the longitudinal direction of the filter material length are disposed in at least one portion of the even pleat wall areas extending between adjacent impressions, (105.1 through 105.3), and
the length of material on which the pleat edges form impressions is of zick-zack folding, whereby the spacers are brought into contact with the corresponding opposing pleat wall or with a corresponding further spacer provided thereupon.

8. Method according to claim 7, **characterized in that** the application of the spacers (105.1 through 105.3) is effected as a amount-controlled adhesive application (104) onto the material length (100) and a hardening (106b; 106b') of the adhesive ensues during and/or subsequent to the folding process (106a).

9. Method according to claim 8, **characterized in that** the adhesive application is controlled such that the adhesive agent aggregates (105.1 through 105.3) are applied in the longitudinal direction of the material length with a decreasing, respectively increasing height, and/or adhesive agent aggregates of differing heights are successively applied.

10. Method according to claim 9, **characterized in that** the height of the adhesive agent aggregates is modified by variation of the adhesive volume output per unit of time by an application device (104a) and/or by variation of the actual relative speed between application device and filter material length (100) and/or by an expanding of the pleats (106a.2') subsequent to an initial folding step (106.1').

11. Adhesive application device (104; 104') for applying adhesive tracks (3; 105; 105.1 through 105.3; 105a, 105b) on a continuous flat filter material (2; 100) at a predetermined periodicity, comprising a plurality of homogeneous application units (104a; 40; 40'; 40"; 40"'; 50) to which at least one dosing means (104b; 104b'; 47; 47'; 47"; 47"'; 52) is allocated for adjusting the adhesive volume output from the application units per unit of time, **characterized in that** the dosing means is/are allocated a control device (102c, 104b, 104d; 104c') operated at a predetermined dosing cycle interval of time for a time-contingent synchronous adjusting of the output adhesive volume for all application devices in accordance with an area of steadily increasing or steadily enveloping characteristic curve such that the application device having a periodicity defined by the dosing cycle time generates identical adhesive tracks having a height increase predetermined by the characteristic curve of application and the properties of the adhesive and the filter material,
**characterized in that** said application units (104a; 40; 40'; 40"; 40"'; 50) comprise a nozzle or needle having a dosing element (44a; 44a'; 44a"; 44a"'; 52) which is controllably displaceable along the nozzle or needle axis relative to its outlet.

12. Adhesive application device according to claim 11, **characterized in that** each application unit (104a; 40; 40'; 40"; 40"') comprises a dosing means (104b; 104b'; 47; 47'; 47"; 47"'), and said dosing means is allocated a common control device (102c, 104b, 104d; 104c').

13. Adhesive application device according to claim 11 or 12,
**characterized in that** said dosing means (104b; 104b'; 47; 47'; 47"; 47"'; 50) is conceived for realizing a dosing cycle time of less than 1 s, in particular less than 0.2 s.

14. Adhesive application device according to one of claims 11 through 13,
**characterized in that** said nozzle or needle comprises a conically configured adhesive outlet portion (41a) and that said dosing element (44a; 44a', 44a") comprises a dosing cone having a slightly smaller conical angle relative to the nozzle or needle cone.

15. Adhesive application device according to any one of claims 11 through 14, **characterized in that** said dosing element (52) is disposed at a constant spacing relative to the filter material surface (100), in particular virtually abuts same, and that the spacing of the outlet of the nozzle or needle (50) is variable relative to the filter material surface.

16. Adhesive application device according to any one of claims 11 through 15, **characterized in that** said application units (104a; 40; 40'; 40"; 40"'; 50) are allocated mechanical, pneumatic, hydraulic or electromagnetic functioning actuating means (46, 47; 47"; 47"') for displacing of said dosing element (44a; 44a'; 44a"; 44a"') or said outlet.

17. Adhesive application device according to claim 16, **characterized in that** said actuating means comprises a cam mechanism (47) and a pretensioning spring device (46) counteracting said cam mechanism, whereby said cam mechanism comprises a control curve shaped according to the characteristic curve.

18. Adhesive application device according to claim 16, **characterized in that** said actuating means include a motor-gear unit (44a"', 47'"), in particular an arrangement of an incremental motor and a threaded rod or gear rack.

19. Adhesive application device according to any one of claims 15 through 18, **characterized in that** said actuating means (46, 47; 47", 47'") is configured for generating a short-term application pressure which exceeds the adhesive feed pressure at the outlet.

20. Adhesive application device according to any one of claims 11 through 19, **characterized in that** said application units (40') are allocated a common quick-acting pressure control device for the control of the adhesive feed pressure.

21. Adhesive application device according to any one of claims 11 through 20, **characterized in that** at least one sensor (102b; 102c) is connected with said control device at the input, for sensing the position of a point on the filter material which is relevant for the adhesive application, in particular in determining the actual starting point of the dosing cycle time or a characteristic value for an additional step for processing of same, and/or the flow rate of the filter material (2; 100).

22. Adhesive application device according to claim 21, **characterized in that** said sensor is formed by or allocated to a transport or impressing shaft (102b) of a transport device and/or impressing device (102) for said filter material (2; 100).

23. Adhesive application device according to claim 17 and 22,
**characterized in that** said control device comprises a mechanical transmission device (104c') connecting and synchronizing said cam mechanism with said transport and impressing shaft.

24. Adhesive application device according to any one of claims 21 through 23, **characterized in that** said control device comprises a programmable processing unit (104b) at the input which is connected with the sensor (102b; 102c) and a characteristic curve memory (104d) for storing predetermined characteristic application curves for realizing a plurality of adhesive track profiles, and connected at the output with said dosing means (104a) and/or said pressure control device.

25. Arrangement for the production of a fluid filter element having an adhesive application device according to any one of claims 11 through 24, **characterized by** an impressing device (102) for forming pleat edge dents (103) and/or reinforcing depressions in the filter material, and means (102c, 104c; 102b, 104c') for synchronizing said impressing device with the control of the adhesive application device (104; 104') for creating adhesive tracks (3; 105; 105.1 through 105.3) having a local cross-section in a predetermined spatial arrangement with the pleat edge dents (103) and/or depressions, defining the dosing cycle time by their spacings.

## Revendications

1. Élément de filtre (1 ; 21 ; 31 ; 41 ; 51 ; 61), en particulier de forme extérieure parallélépipédique ou en cylindre creux, comportant une pluralité de parois de plis (2b ; 12b ; 22b ; 32b ; 42b ; 52b ; 62b ; 11.1", 100.2") planes, chacune disposée en pliage continu entre des bords de plis (2a ; 12a ; 22a ; 32a ; 42a ; 52a ; 62.a1, 62.a2 ; 103), d'un matériau de filtre (2 ; 212 ; 22 ; 32 ; 42 ; 52 ; 62 ; 100) perméable aux fluides, des écarteurs (3 ; 13a-c ; 23a, 23b ; 33 ; 43a-c ; 53 ; 63a, 63b ; 105.1 à 105.3) étant prévus dans au moins une section, entre au moins chaque deuxième paire avoisinante des parois de plis, les reliant et les faisant se supporter l'une contre l'autre, qui ne sont pas constitués dudit matériau de filtre,
**caractérisé en ce que**
les écarteurs, d'une hauteur variable perpendiculairement aux bords de plis, qui deviennent continuellement plus plats, dans le même sens que le rétrécissement de section du pli concerné dans la direction vers le niveau ou le fond des plis, sont formés sur le matériau de filtre plan et/ou perpendiculairement aux bords de plis, chaque fois, au moins deux écarteurs de hauteur différente sont formés en rangée sur le matériau de filtre plan, de manière telle que par le contact de l'écarteur avec la paroi de plis située en face ou avec un écarteur disposé sur celle-ci, une disposition de plis en zigzag est formée.

2. Élément de filtre selon la revendication 1, **caractérisé en ce que** les écarteurs (3 ; 13a-c ; 23a, 23b ; 33 ; 43a-c ; 53 ; 63a, 63b ; 105.1 à 105.3) sont formés par des agrégats de substance adhésive durcis.

3. Élément de filtre selon la revendication 1 ou 2, **caractérisé en ce que,** s'étendant sur la partie plus grande de la longueur du matériau de filtre entre les bords de plis voisins (2a ; 32a ; 52a), des écarteurs (3 ; 33 ; 53) sont prévus qui, dans la même mesure que le rétrécissement de section d'un pli dans la direction vers ceux des bords de plis deviennent de plus en plus plats, qui ont en commun les parois de plis (2b ; 32b ; 52b) reliées les unes aux autres par ledit écarteur.

4. Élément de filtre selon la revendication 1 ou 2, **caractérisé en ce que** des écarteurs (13a, 13b ; 23b ; 43a, 43b ; 63a ; 105.2, 105.3) s'étendant sur la partie plus petite de la longueur de matériau entre les bords de plis avoisinants sont prévus dans celui des domaines du pliage dans lequel les parois de plis (12b ; 22b ; 42b ; 62b ; 100.1", 100.2") présentent un grand écartement entre elles.

5. Élément de filtre selon la revendication 3 ou 4, **caractérisé en ce que** les écarteurs sont chaque fois essentiellement disposés à proximité d'un bord de plis pré-imprimé et délimités par celle-ci.

6. Élément de filtre selon l'une des revendications précédentes, **caractérisé en ce que** sur des parois de plis adjacentes, le matériau de filtre (2 ; 12) présente des écarteurs (3a ; 13a-c) en disposition alternée, orientés vers les deux côtés, de manière telle que les parois de plis (2b ; 12b) s'appuient bilatéralement par des entretoises d'écartement contre des parois de plis voisines.

7. Procédé de fabrication d'un élément de filtre selon l'une des revendications précédentes,
**caractérisé en ce que**
une bande du matériau de filtre (100) n'est pourvue que d'impressions de plis (103) linéaires définissant la position des bords de plis,
ensuite, sur au moins une partie des zones des parois de plis planes s'étendant entre des impressions de plis avoisinantes, des écarteurs (105.1 à 105.3) sont appliqués, de hauteur différente et/ou de hauteur variant dans le sens longitudinal de la bande de matériau de filtre, et
la bande de matériau est pliée en zigzag le long des impressions de plis formant ledit bord de plis, ce par quoi les écarteurs sont mis en contact avec la paroi de plis opposée respective ou avec un autre écarteur respectivement prévu sur celle-ci.

8. Procédé selon la revendication 7, **caractérisé en ce que** l'application des écarteurs (105.1 à 105.3) s'effectue sous la forme d'un apport d'une substance adhésive (104) sur la bande de matériau (100) piloté par quantité et que pendant et/ou après le pliage (106a) un durcissement (106b ; 106b') de la substance adhésive est effectué.

9. Procédé selon la revendication 8, **caractérisé en ce que** l'apport de substance adhésive est commandé de manière telle que des agrégats de substance adhésive (105.1 à 105.3) avec une hauteur en diminution ou en augmentation dans le sens longitudinal de la bande de matériau sont appliqués et/ou des agrégats de substance adhésive de hauteur différente sont appliqués successivement.

10. Procédé selon la revendication 9, **caractérisé en ce que** la hauteur des agrégats de substance adhésive est modifiée par la variation de la quantité de substance adhésive distribuée par unité de temps par un dispositif d'application (104a) et/ou de la vitesse relative instantanée entre dispositif d'application et bande de matériau de filtre (100) et/ou par un évasement des plis (106a.2') après une étape de pliage primaire (106a.1').

11. Dispositif d'application de substance adhésive (104 ; 104') pour appliquer des pistes de substance adhésive (3 ; 105 ; 105.1 à 105.3 ; 105a, 105b) sur un matériau de filtre (2 ; 100) plan circulant, avec une périodicité déterminée, comportant une pluralité d'unités d'application (104a ; 40 ; 40' ; 40" ; 40"' ; 50) de même type, auxquelles est affectée au moins une unité de dosage (104b ; 104b' ; 47 ; 47' ; 47" ; 47"' ; 52) pour régler la quantité de substance adhésive évacuée des unités d'application par unité de temps, au dispositif de dosage ou aux dispositifs de dosage étant affecté un moyen de commande (102c, 104b, 104d ; 104c') activé avec une durée de cycle de dosage déterminée pour le réglage synchrone et en fonction du temps pour toutes les unités d'application de la quantité de substance adhésive évacuée, selon une ligne caractéristique d'application comportant des zones d'augmentation continues ou une enveloppe continue, de manière telle que les moyens d'application génèrent avec la périodicité définie par la durée de cycle de dosage, des pistes de substance adhésive identiques d'une augmentation en hauteur déterminée par la ligne caractéristique d'application et les propriétés des matériaux de la substance adhésive et du filtre, **caractérisé en ce que** les unités d'application (104a ; 40 ; 40' ; 40" ; 40"' ; 50) présentent une buse ou une aiguille comportant un élément de dosage (44a ; 44a'; 44a " ; 44a "' ; 52) coulissant de manière pilotée relativement à l'ouverture d'évacuation le long de l'axe de la buse ou de l'aiguille.

12. Dispositif d'application de substance adhésive selon la revendication 11, **caractérisé en ce que** chaque unité d'application (104a ; 40 ; 40' ; 40" ; 40'") présente un moyen de dosage (104b ; 104b' ; 47 ; 47' ; 47" ; 47"') et qu'aux moyens de dosage est affecté un moyen de commande (102c, 104b, 104d ; 104c') commun.

13. Dispositif d'application de substance adhésive selon la revendication 11 ou 12, **caractérisé en ce que** le moyen de dosage (104b ; 104b' ; 47 ; 47' ; 47" ; 47"' ; 50) est étudié pour réaliser une durée de cycle de dosage inférieure à 1 s, en particulier inférieure à 0,2 s.

14. Dispositif d'application de substance adhésive selon l'une des
revendications 11 à 13, **caractérisé en ce que** la buse ou l'aiguille présente une section d'évacuation de substance adhésive (41a) de forme conique et l'élément de dosage (44a ; 44a' ; 44a") un cône de dosage d'un angle de cône un peu plus petit, par rapport au cône de buse ou d'aiguille.

15. Dispositif d'application de substance adhésive selon l'une des revendications 11 à 14, **caractérisé en ce que** l'élément de dosage (52) présente un écartement constant avec la surface de matériau de filtre (100), en particulier, la touche presque, et que l'écartement entre l'ouverture d'évacuation de la buse ou l'aiguille (50) et la surface de matériau de filtre (100) est variable.

16. Dispositif d'application de substance adhésive selon l'une des revendications 11 à 15, **caractérisé en ce que,** aux unités d'application (104a ; 40 ; 40' ; 40" ; 40'" ; 50), sont affectés des moyens d'actionnement (46, 47 ; 47" ; 47"') mécaniques, pneumatiques, hydrauliques ou électromagnétiques pour le coulissement de l'élément de dosage (44a ; 44a' ; 44a") ou de l'ouverture d'évacuation.

17. Dispositif d'application de substance adhésive selon la revendication 16, **caractérisé en ce que** les moyens d'actionnement présentent un dispositif de came (47) et un dispositif de pré-tension à ressort (46) agissant dans le sens contraire du dispositif de came, le dispositif de came comprenant une courbe de commande formée selon la ligne caractéristique.

18. Dispositif d'application de substance adhésive selon la revendication 16, **caractérisé en ce que** les moyens d'actionnement comprennent une unité moteur-entraînement (44a"', 47"'), en particulier une disposition d'un moteur pas à pas et d'une barre filetée ou dentée.

19. Dispositif d'application de substance adhésive selon l'une des revendications 15 à 18, **caractérisé en ce que** les moyens d'actionnement (46, 47 ; 47" ; 47"') sont configurés pour créer brièvement à l'ouverture d'évacuation une pression d'application excédant la pression d'approvisionnement de la substance adhésive.

20. Dispositif d'application de substance adhésive selon l'une des revendications 11 à 19, **caractérisé en ce qu'**aux unités d'application (40') est affecté en commun un dispositif à action rapide de commande de pression pour commander la pression d'approvisionnement en substance adhésive.

21. Dispositif d'application de substance adhésive selon l'une des revendications 11 à 20, **caractérisé en ce que,** côté entrée, à l'unité de commande est relié au moins un capteur (102b ; 102C) de la position d'un point sur le matériau de filtre, significatif pour l'application de substance adhésive, en particulier déterminant le point actuel de départ de la durée de cycle de dosage, ou un paramètre caractérisant une étape supplémentaire de traitement dudit point et/ou la vitesse de parcourt du matériau de filtre (2 ; 100).

22. Dispositif d'application de substance adhésive selon la revendication 21, **caractérisé en ce que** le capteur est formé de ou associé à un arbre de transport ou dimpression (102b) d'un dispositif de transport et/ou d'impression (102) pour le matériau de filtre (2 ; 100).

23. Dispositif d'application de substance adhésive selon la revendication 17 et 22, **caractérisé en ce que** le dispositif de commande comprend un dispositif de transfert (104c') mécanique synchronisant et reliant le dispositif de came avec l'arbre de transport ou dimpression.

24. Dispositif d'application de substance adhésive selon l'une des revendications 21 à 23, **caractérisé en ce que** le dispositif de commande présente une unité de traitement (104b) programmable qui, côté entrée, est reliée avec le capteur (102b ; 102c) et une mémoire de lignes caractéristiques (104d) pour stocker des lignes caractéristiques d'application déterminées pour réaliser une pluralité de profils de piste de substance adhésive et, côté sortie, avec le dispositif de dosage (104a) et/ou le dispositif de commande de pression.

25. Arrangement pour fabriquer un insert de filtre de fluides comportant un dispositif d'application de substance adhésive selon l'une des revendications 11 à 24, **caractérisé par** un dispositif dimpression (102) pour former des impressions (103) de bords de plis et/ou, dans le matériau de filtre, des dépressions à effet renforçant, et des moyens (102c, 104c ; 102b, 104c') pour synchroniser le dispositif dimpression avec la commande du dispositif d'application de substance adhésive (104 ; 104') pour réaliser les pistes de substance adhésive (3 ; 105 ; 105.1 à 105.3) avec une section locale en affectation spatiale déterminée aux impressions des bords de plis (103) et/ou aux dépressions et avec la durée de cycle de dosage déterminée par leur écartement.
